# EUROPEAN PATENT APPLICATION

(11) **EP 3 929 363 A1**
(43) Date of publication of application: **29.12.2021**
(21) Application number: 21181890.1
(22) Date of filing: 25.06.2021
(51) Int. Cl.: E03C 1/02, H02G 3/32

(54) **RECESSABLE BOX FOR HOUSING HYDRAULIC COMPONENTS**

(30) Priority: 26.06.2020 IT 202000015520
(71) Applicant: RBM IBOX S.R.L., 25075 Nave (BS) (IT)
(72) Inventor: BOSSINI, Guido, 25075 Nave (BS) (IT)
(74) Representative: Franzolin, Luigi

(57) **Abstract**

Recessable box for housing hydraulic components, comprising a frontally open box body (2) and configured to be housed and fixed in a compartment (35; 42) provided in a wall (36), and a frame (5) with a support face (9) and configured to be mounted on the body (2) in a first and a second position, wherein the support face (9) is facing the body (2) and, respectively, opposite the body (2); the box comprising adjustment means (15, 13, 24) for varying the distance between the frame (5) and the body (2).

## Description

### CROSS-REFERENCE TO RELATED APPLICATIONS

This patent application claims priority from Italian patent application no. 102020000015520 filed on 26/06/2020.

### TECHNICAL FIELD

The present invention relates to a recessable box for housing hydraulic components, in particular components of a heating or sanitary system such as manifolds, valves and the like.

### BACKGROUND ART

Boxes of the aforementioned type are known, which comprise a frontally open box body and configured to be housed and fixed in a suitable compartment provided in the wall, and a front closing plate. The plate is generally mounted in contact with the wall, so as to frontally close the body and adhere to the wall around the compartment. This type of box is generally used for the installation in solid walls, wherein the compartment is provided by means of local demolition of the wall and it is not possible or practical to control the dimensions thereof in a precise manner. The plate protrudes with respect to the plane of the wall and overlaps with the edges of the compartment, preventing the view thereof.

Boxes are also known, particularly for use in presence of plasterboard walls, wherein the plate is replaced by a trapdoor flush with the wall mounted in an opening having given dimensions of the wall.

The known boxes are suitable for the one or the other application.

This is a drawback not only for the producer, that has to manufacture different components for the two versions, with higher production and storage costs, but also for a professional user, for example a plumber, that has to be equipped with the two different versions.

### DISCLOSURE OF INVENTION

The object of the present invention is to manufacture a universal box, which solves the aforementioned problem.

The aforementioned object is achieved by a recessable box for housing hydraulic components comprising a frontally open box body configured to be housed and fixed in a compartment provided in a wall, and at least one front closing element securable to the body, wherein the front closing element comprises a frame with a support face and configured to be mounted on the body in a first and a second position, wherein the support face is facing the body or, respectively, opposite the body, and by comprising adjustment means for varying the distance between the frame and the body.

Thanks to the present invention, the box is suitable to applications having external plate and flush with the wall, thus producing economies of scale. Furthermore, a user can purchase one single type of box to be used in both types of application.

Preferably, the adjustment means comprise a screw system.

According to a preferred embodiment, the screw system comprises a number of screws axially attachable to the frame and engaging respective threaded holes in the body.

In this manner, it is possible to adjust the distance between the body and the frame in a precise manner and in both directions, so that the frame perfectly matches an outer or inner surface of the wall.

Preferably, the screws are axially bound to the frame by means of releasable locking elements. This allows mounting the screws on the frame after the insertion of the frame in a compartment of the wall, thus preventing the screws from hindering the insertion of the frame in the situations where the available space is reduced.

According to a preferred embodiment, the frame comprises a plurality of through holes for said screws, and the locking elements are configured to fit on the frame in proximity to the holes so as to cooperate with the respective heads of the screws.

Preferably, the holes are provided in internal projections of the frame and define a seat for the head of the respective screw; the locking elements are U-shaped and configured to fit on the respective projection and axially lock the head of the screw while allowing them to be turned.

In this manner, the mounting is particularly simple.

According to an embodiment of the invention, the box comprises a plate insertable into a seat inside the frame, and preferably locked in the frame by magnetic means. In this manner, no discontinuities or securing elements are seen.

Optionally, the seat comprises first rests for housing the plate flush with a flat face of the frame opposite the support face and second rests for housing the plate flush with the seat of the frame in the second configuration of the frame. In this manner, the plate is perfectly flush with the frame.

Preferably, the body comprises seats for the connection of supports for hydraulic components.

### BRIEF DESCRIPTION OF THE DRAWINGS

In order to better understand the invention, a preferred embodiment is illustrated below, by way of non-limiting example and with reference to the accompanying drawings, wherein:
Figure 1 is an exploded perspective view of a recessable box according to the present invention, in a first configuration thereof;
Figures 2, 3 and 4 illustrate a detail of the box of Figure 1, during the following mounting steps;
Figure 5 is a front view of the box of Figure 1;
Figure 6 and Figure 7 are sections according to line VI-VI of Figure 5, on an enlarged scale and in following mounting steps;
Figure 8 is an exploded perspective view of the recessable box of Figure 1, in a second configuration thereof;
Figures 9, 10 and 11 illustrate a detail of the box of Figure 8, during the following mounting steps;
Figure 12 is a front view of the box of Figure 8;
Figure 13 is a section according to line XIII-XIII of Figure 12, on an enlarged scale.

### BEST MODE FOR CARRYING OUT THE INVENTION

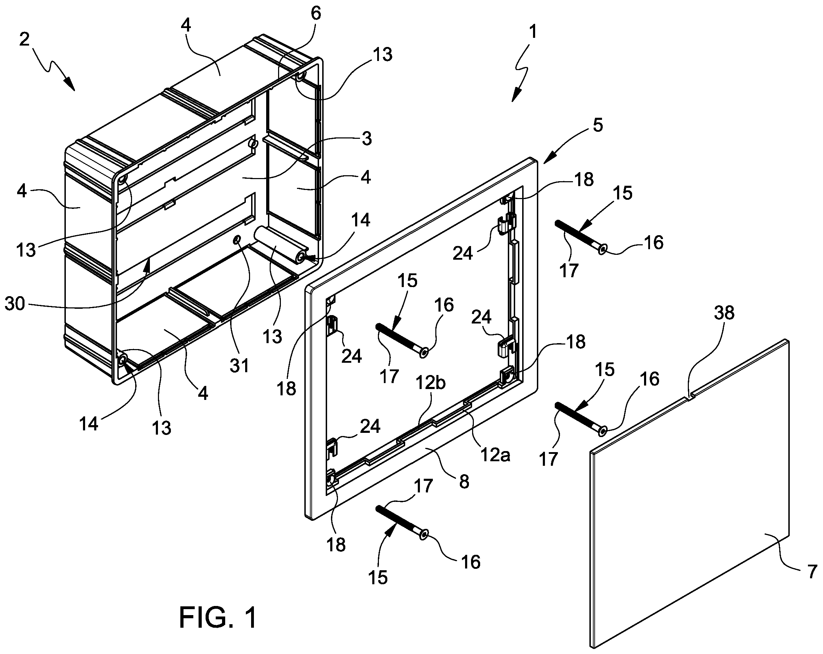

With reference to Figure 1, reference numeral 1 indicates, as a whole, a recessable box for housing hydraulic components according to the present invention.

The box 1 comprises a frontally open box body 2, with parallelepiped shape and comprising a bottom wall 3 and four side walls 4.

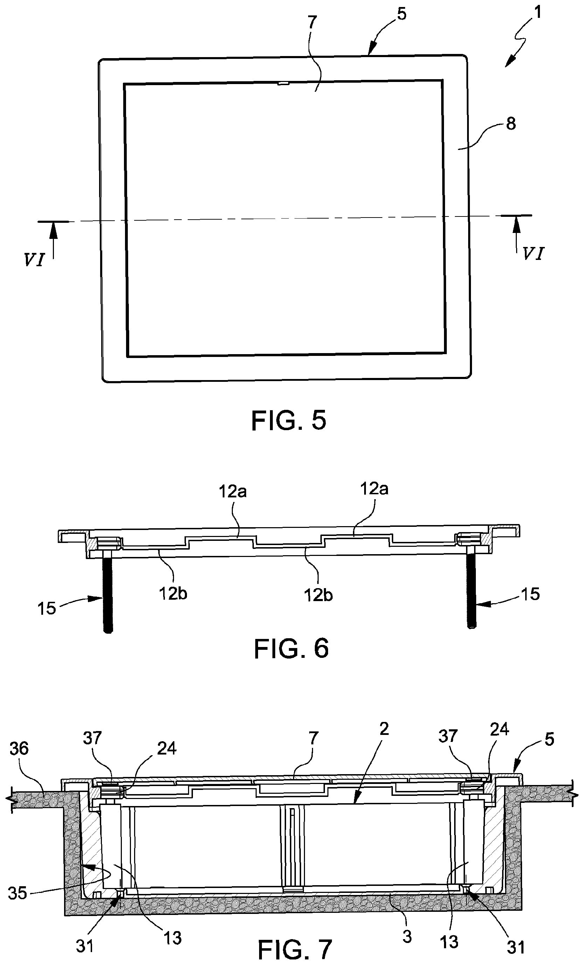

The body 2 is configured to be recessed in a wall, as visible in Figure 7 and will be better described below.

The box 1 further comprises a frame 5 with the shape of a rectangular seat arranged on a plane parallel to the bottom wall 3 and configured to be connected to the body 2 along a front edge 6 of the side walls 4.

The box 1 finally comprises a plate 7 configured to be fixed in removable manner to the frame 5 so as to frontally close the box 1.

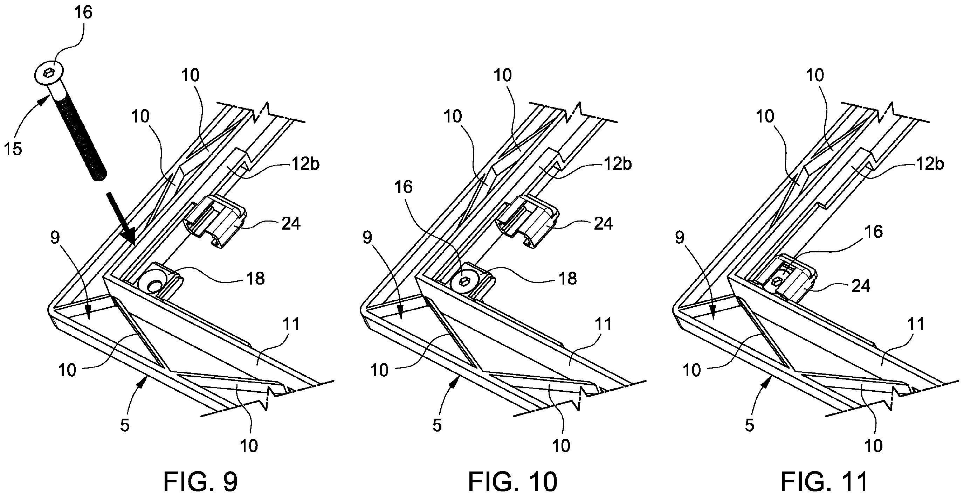

The frame 5, as clearly inferable from the comparison between Figures 1-4 and Figures 8-11, can be fixed to the body 2 in two different arrangements, inverted with respect to one another, and the distance of said frame 5 from the body 2 can be adjusted as described below.

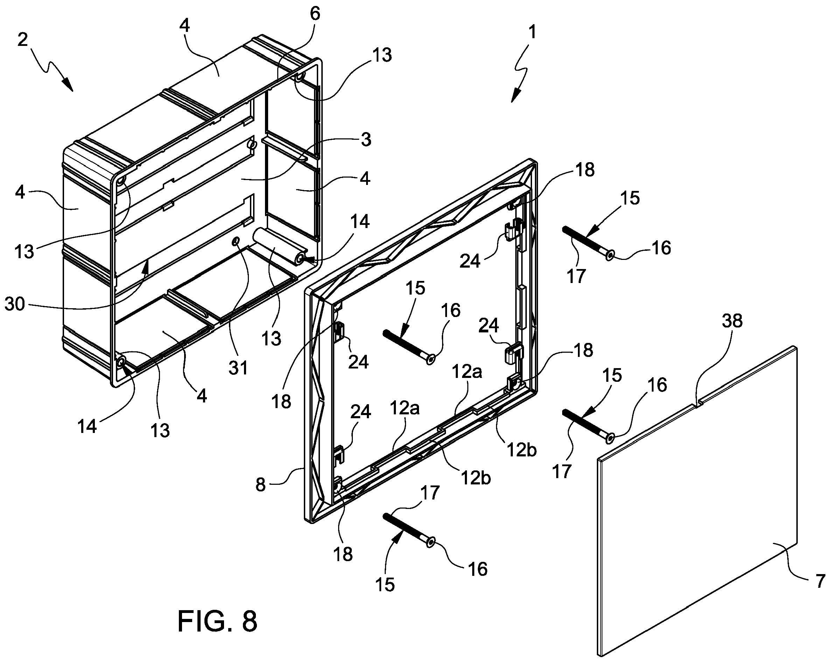

In particular, in the illustrated non-limiting example, the frame has a flat face 8 (Figures 1-4) and an opposite support face 9 provided with a series of stiffening ribs 10 (Figures 8-11), and can be fixed to the body 2 with the flat face 8 facing frontally and the support face facing the body 2 (Figures 1-4) or with the flat face 8 facing the body 2 and the support face 9 facing frontally (Figures 8-11).

The frame 5 comprises an internal seat 11, axially extending from an internal edge of the frame on the side of the support face 9; inside the seat 11, configured to house the plate 7, two series of rests 12a, 12b for the plate 7 are arranged. The rests 12a are arranged so as to define a support plane for the plate 7 such that the plate 7, when introduced in the seat 11 on the side of the flat face 8 of the frame 5, is flush with such face. The rests 12b are arranged so as to define a support plane for the plate 7 such that the plate 7, when introduced in the seat 11 on the side of the support face 9 of the frame 5, is flush with the seat 11. The axial extension of the seat 11 beyond the support face 9 of the frame 5 is conveniently equal to the thickness typical of a plasterboard sheet.

The body 2 has four internal projections 13, having a substantially cylindrical shape, arranged in proximity to the side edges. The projections 13, having axis perpendicular to the bottom wall 4, have respective threaded axial holes 14 for respective connection screws 15 of the frame 5. The screws 15 conveniently have a recessed hexagonal cone-shaped head 16 and a threaded shank 17.

The frame 5 has, in turn, four internal projections 18 having quadrangular plate-shape, arranged in proximity to the internal edges of the frame and facing the projections 13 of the body 1.

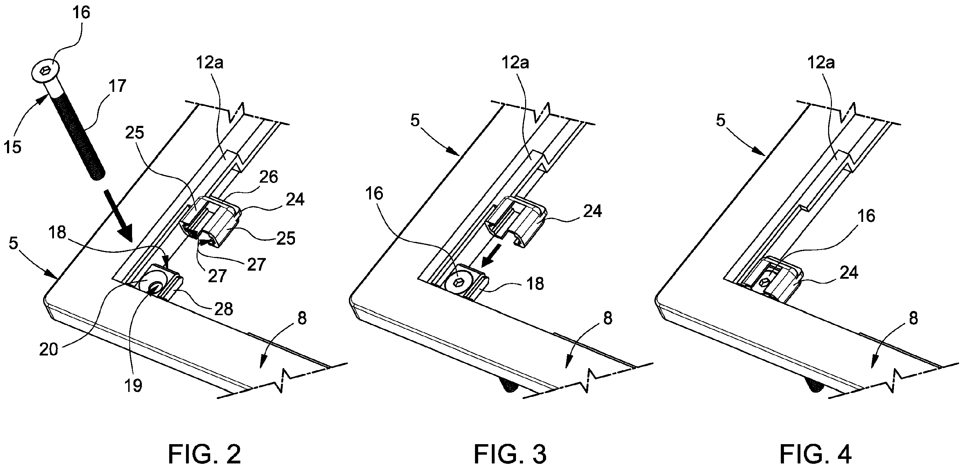

More in particular, the projections 18, one of which is clearly visible in Figure 2, extend from the longest sides of the frame 5 inwards, in proximity to the shortest sides of the frame but at a small distance from the same. The projections 18 are each provided with a through hole 19 through which the stem 17 of the respective screw 15 passes having a countersunk portion 20 with function of seat for the head 16 of the screw 15.

The box 1 finally comprises four locking elements 24, configured to slidingly couple to the respective projections 18. Each locking element (Figures 2-4) is substantially U-shaped and comprises a pair of longitudinal portions 25 parallel to one another and a transverse portion 26 integrally connecting to one another respective ends of the longitudinal portions 25. The latter have a substantially C-shaped transverse section with concavities facing one another so as to define respective internal seats 27 slidingly couplable to respective side ribs 28 of the projections 18 (only one of which is visible in Figures 2 and 3).

The longitudinal portions are spaced from one another at a distance greater than the diameter of the stem 17 but smaller than the maximum diameter of the head 16 of the screws 15, so as to axially lock the head 16 in the seat 20 anyway allowing the access to the recessed hexagon of the head 16 by means of a spanner (Figure 4).

The body 2 of the box 1 is conveniently provided with dovetail seats 30 made on the bottom wall 3 for the connection of supports for manifolds (not illustrated). On the bottom wall, holes 31 are further present for the securing to the wall by means of screw anchors for masonry or screws for plasterboard.

The side walls 4 are conveniently provided with removable portions (not illustrated) for allowing the passage of the tubes entering or exiting.

The functioning of the box 1 is described below with reference to the first mounting configuration illustrated in Figures 1-7 and to the second mounting configuration illustrated in Figures 8-13.

With reference to the first configuration, suitable for the mounting in a compartment 35 (Figure 7) provided for demolition in a masonry wall 36, the body 1 is fixed in a known manner inside the compartment 35.

The screws 15 are then inserted in the holes 19 of the projections 18 of the frame 5 (Figure 2), so that the relative head 16 is housed in the conical seat 20 (Figure 3). The screws 15 are then axially locked with respect to the frame 5 inserting the locking elements 24 on the projections 18 (Figures 4 and 6).

The frame 5 can now be fixed to the body 2 screwing the screws 15 in the holes 14 of the body 2. By screwing the screws 15, the frame 5 draws progressively close to the body 2, and thus to the wall 36, until resting thereon around the compartment 35. Any dimensional imperfections of the compartment are thus hidden to sight.

The frame 5 is finally frontally closed by means of application of the plate 7. The securing of the plate 7 is conveniently of magnetic type. To such purpose, magnets 37 can be fixed to the plate 7, said magnets 37 configured to cooperate with the heads 16 of the screws 15, if ferromagnetic (Figure 7), or with corresponding ferromagnetic elements embedded in the frame 5 (not illustrated). The plate 7 is conveniently provided with at least one notch 38 along the edge (Figures 1 and 8) for the insertion of a tool, for example a screwdriver, for removing the plate 7 from the frame 5 if necessary. Alternatively, the plate 7 can be removed by means of a suction cup (not illustrated).

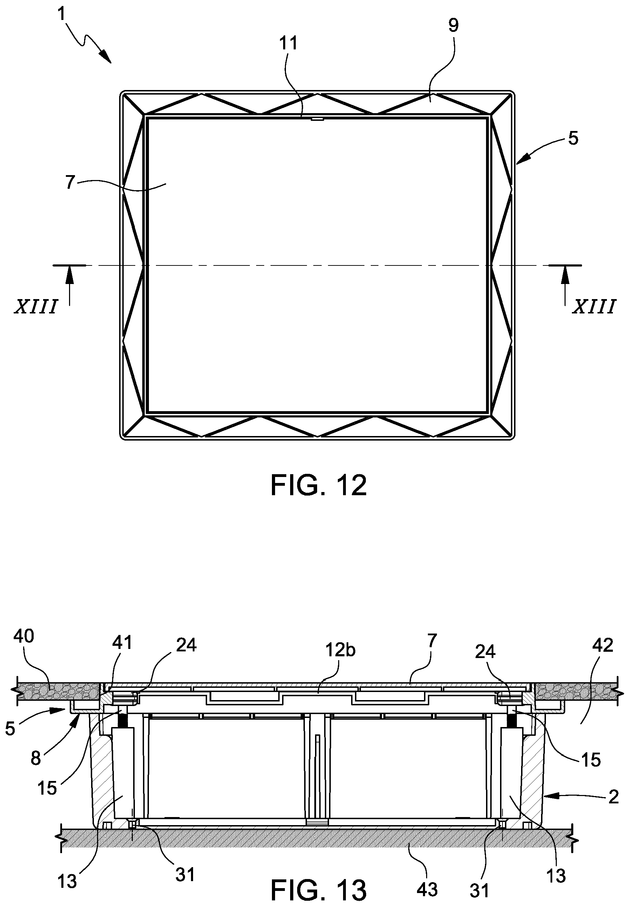

In the second configuration, suitable for the mounting in a plasterboard structure 40 provided with an opening 41 (Figure 13) and frontally delimiting a compartment 42, the frame 5 is fixed to the body 2 in an inverted position, i.e. with the flat face 8 facing the body and the support face 9 facing the opposite side of the body 2.

The mounting occurs as follows.

Firstly, the body 2 is inserted inside the compartment 42 and is fixed to a support structure 43 on the bottom of the compartment schematically indicated in Figure 13; such structure can be composed of, for example, one or more metallic bars.

Subsequently, the frame 5 is screwed onto the body 2 by means of the screws 15. When the screws 15 are screwed so as to maintain the frame 5 in proximity to the body 2, the locking elements 24 are applied so as to axially lock them with respect to the frame.

Subsequently, the sheets of the plasterboard structure 40 delimiting the opening 41 are cut to size and applied.

At this point, the screws 15 are partially unscrewed, thus moving the frame 5 away from the body 2, until the support face 9 of the frame 5 matches the internal side of the plasterboard structure 40.

Finally, the plate 7 is mounted in the frame 5, said plate 7 being flush with the wall based on what said above.

Examining the characteristics of the box 1 manufactured according to the present invention, the advantages that it allows obtaining are apparent.

The possibility to mount the frame 5 in two configurations, the one inverted with respect to the other, in combination with the adjustable connection between the body 2 and the frame 5, allows mounting the box 1 in a configuration with the frame overlapping the wall, particularly suitable to recessable applications in a masonry wall, and in a second configuration flush with the wall, particularly suitable to recessable applications in a plasterboard wall.

This entails economies of scale both at production level and at use level, and greater convenience of application.

Finally, it is clear that modifications and variants can be made to the described box 1 which do not depart from the scope of protection defined by the claims.

In particular, the adjustment system of the distance relative between body 2 and frame 5 can be modified.

## Claims

1. Recessable box for housing hydraulic components, comprising a frontally open box body (2) configured to be housed and fixed in a compartment (35; 42) provided in a wall (36), and at least one front closing element (5, 7) securable to the body, **characterized in that** the front closing element includes a frame (5) with a support face (9) and configured to be mounted on the body (2) in a first and a second position, wherein the support face (9) is facing the body (2) and, respectively, opposite the body (2), and by including adjustment means (15, 13, 24) for varying the distance between the frame (5) and the body (2) .

2. Box as claimed in claim 1, wherein said adjustment means include a screw system (15, 13, 24).

3. Box as claimed in claim 2, wherein the screw system comprises a plurality of screws (15) axially constrainable to the frame (5) and engaging respective threaded holes (14) in the body (2).

4. Box as claimed in claim 3, including releasable locking elements (24) configured to axially constrain the screws (15) to the frame (5).

5. Box as claimed in claim 4, wherein the frame (5) comprises a plurality of through holes (19) for said screws (15), and the locking elements (24) are configured to fit on the frame (5) in proximity to the holes (19) so as to cooperate with the respective heads (16) of the screws (15).

6. Box as claimed in claim 5, wherein said holes (19) are provided in internal projections (18) of the frame (5) and define a seat (20) for the head (16) of the respective screw (15), said locking elements (24) being U-shaped and configured to fit on the respective projection (18) and axially lock the head (16) of the screw (15) while allowing them to be turned.

7. Box as claimed in one of the above claims, including a plate (7) insertable into a seat (11) inside the frame.

8. Box as claimed in claim 7, wherein the plate (7) is locked in the frame (5) by magnetic means.

9. Box as claimed in claim 7 or 8, wherein the seat (11) includes first rests (12a) for housing the plate (7) flush with a flat face (8) of the frame opposite the support face (9) and second rests for housing the plate flush with the seat (11) of the frame (5) in the second configuration of the frame.

10. Box as claimed in one of the above claims, wherein the body (2) includes seats (30) for the connection of supports for hydraulic components.
